# EUROPEAN PATENT APPLICATION

(11) **EP 4 236 439 A1**
(43) Date of publication of application: **30.08.2023**
(21) Application number: 23158194.3
(22) Date of filing: 23.02.2023
(51) Int. Cl.: H04W 24/10, H04W 24/08, H04W 24/02

(54) **USER EQUIPMENT BEHAVIOR WHEN PRE-CONFIGURED MEASUREMENT GAP IS CHANGED**

(30) Priority: 23.02.2022 US 202263313141 P
(71) Applicant: INTEL Corporation, Santa Clara, CA 95054 (US)
(72) Inventor: HUANG, Rui, Beijing, 100085 (CN); CHERVYAKOV, Andrey, Maynooth, W23 XN36 (IE); ZHANG, Meng, Beijing, 100000 (CN); LI, Hua, Beijing, 100086 (CN); BOLOTIN, Ilya, 603089 Nizhny Novgorod (RU)
(74) Representative: Viering, Jentschura & Partner mbB Patent- und Rechtsanwälte

(57) **Abstract**

An apparatus of a New Radio (NR) User Equipment (UE) (202), the apparatus including a radio frequency (RF) interface, and one or more processors (314) coupled to the RF interface and configured to: use a pre-configured measurement gap for UE measurement, when the pre-configured gap status is switched between activated and deactivated during a measurement period.

## Description

### CROSS-REFERENCE TO RELATED APPLICATIONS

This application claims priority to US Application 63/313,141, filed on February 23, 2022, the entire contents of which are incorporated herein by reference.

### BACKGROUND

Various embodiments generally may relate to the field of wireless communications. When a UE performing a measurement with a pre-configured measurement gap (MG), there is some pre-configured gap status change (e.g. activated to deactivated or vice versa). Various embodiments herein may define UE behavior when network (NW) transform the pre-configured MG to the other MGs .

### BRIEF DESCRIPTION OF THE FIGURES

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts Table 9.1.2-1 of ETSI Standard TS38.133 v17;
FIG. 2 depicts a network in accordance with various embodiments;
FIG. 3 depicts a wireless network in accordance with various embodiments; and
FIG. 4 is a block diagram illustrating components able to read instructions from a machine-readable or computer-readable medium and perform any one or more of the methodologies discussed herein.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

### UE behavior when pre-MG status changes

When UE performing the measurement with the pre-configured measurement gap, there is some pre-configured gap status change (e.g. activated to deactivate or vice versa). Embodiments herein may define UE behavior in these circumstances.

Therefore, embodiments herein may include:
∘ Option 1: "It is up to UE to continue or restart the measurement with pre-MG if there is pre-MG status switching.
   ◆ For measurements that can be performed both out of and within MG, the measurement period can be started from the first measurement sample after the pre-MG status is changed during the measurement period.
   ◆ For measurements can only be performed within MG( e.g. NR positioning measurements and CSI-RS inter-frequency measurements), measurement requirements would NOT apply if the pre-MG status changed (activated →deactivated) during the measurement period.
∘ Option 2: "It is up to UE to continue or restart the measurement with pre-MG if there is pre-MG status switching.
   ◆For measurements that can be performed both out of and within MG, the measurement period requirement can be taken the requirements for the measurement with gap.
   ◆For measurements can only be performed within MG( e.g. NR positioning measurements and CSI-RS inter-frequency measurements), measurement requirements would NOT apply if the pre-MG status changed (activated →deactivated) during the measurement period.

### i. Embodiment 1:

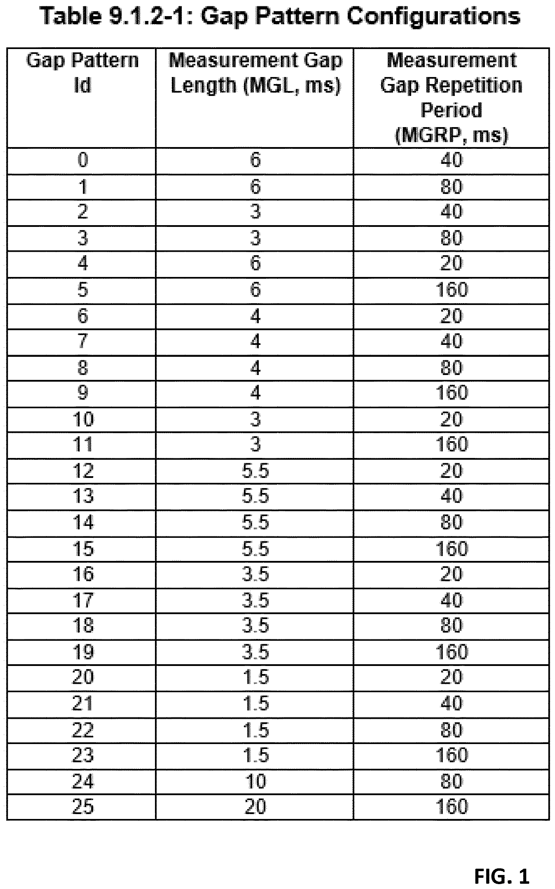

This disclosure relates at least to RAN4 spec, ETSI TS38.133 v.17 (see FIG. 1).

### 9.1.2A.3 Requirements

Any of the measurement gap pattern defined in Table 9.1.2-1 of ETSI TS38.133 v.17 (see FIG. 1) can be configured as a Pre-MG pattern.

The UE capable of an autonomous activation/deactivation mechanism [1] can autonomously change the Pre-MG status from activation to deactivation or vice versa based on any of the following triggering conditions:
- DCI or timer based active BWP switching,
- Activation/deactivation of SCell(s).

If per-LTE Pre-MG pattern is activated then the LTE is not required to conduct reception/transmission from/to the corresponding serving cells according to the same principles as described for per-LTE measurement gaps in clause 9.1.2. Otherwise, the LTE can be scheduled for reception/transmission of signals in all the serving cells.

If per-FR Pre-MG pattern is activated then the UE is not required to conduct reception/transmission from/to the corresponding serving cells on the same FR according to the same principles as described for per-FR measurement gaps in clause 9.1.2. Otherwise, the UE can be scheduled for reception/transmission of signals in all the serving cells in the same FR.

The UE shall autonomously assume the status of the per-UE Pre-MG pattern as deactivated immediately after the configuration of the per-UE Pre-MG pattern provided that all the configured measurements can be performed without measurement gaps. The UE shall autonomously assume the status of the per-FR Pre-MG pattern as deactivated immediately after the configuration of the per-FR Pre-MG pattern provided that all the configured measurements in the same FR can be performed without measurement gaps.

A measurement can be performed by the UE without measurement gaps if any of the following conditions is met:
- The LTE is configured with SSB based intra-frequency measurements, and the conditions defined for SSB based intra-frequency measurement without gaps in Clause 9.2.1 are met, or
- The LTE is configured with SSB based inter-frequency measurements, and the conditions defined for SSB based inter-frequency measurement without gaps in Clause 9.3.1 are met, or
- The UE is configured with CSI-RS based intra-frequency measurements.

The UE shall autonomously assume the status of the per-UE Pre-MG pattern as activated immediately after the configuration of the per-UE Pre-MG pattern provided that at least one of the configured measurements cannot be performed without measurement gaps. The UE shall autonomously assume the status of the per-FR Pre-MG pattern as activated immediately after the configuration of the per-FR Pre-MG pattern provided that at least one of the configured measurements in the same FR cannot be performed without measurement gaps.

A measurement cannot be performed by the UE without measurement gaps if any of the following conditions is met:
- The LTE is configured with SSB based intra-frequency measurements, and the conditions defined for SSB based intra-frequency measurement without gaps in Clause 9.2.1 are not met, or
- The LTE is configured with SSB based inter-frequency measurements, and the conditions defined for SSB based inter-frequency measurement without gaps in Clause 9.3.1 are not met, or
- The UE is configured with any of the following measurements:
   - CSI-RS based inter-frequency measurements, or
   - NR PRS-based positioning measurements, or
   - E-UTRA Inter-RAT measurements, or
   - E-UTRA Inter-RAT RSTD and E-CID measurements, or
   - UTRA Inter-RAT measurements.

The UE capable of supporting Pre-MG pattern with network-controlled mechanism shall deactivate the Pre-MG pattern when any of the following conditions is met:
- The LTE is configured with only PCell and the RRC indication [TBD by RAN2] is 'deactivation' .

The UE capable of supporting Pre-MG pattern with network-controlled mechanism shall activate the Pre-MG pattern when any of the following conditions is met:
- The LTE is configured with only PCell and the RRC indication [TBD by RAN2] is `activation'.

A LTE capable of both autonomous and network-controlled mechanisms for activation/deactivation of Pre-MG pattern will not use autonomous rules to determine the activation/deactivation status of the pre-configured MG if the network provides the activation/deactivation status via RRC indication [TBD by RAN2].

It is up to UE to continue or restart the measurement with pre-MG if there is pre-MG status switching.

For measurements that can be performed both out of and within MG, the measurement period can be started from the first measurement sample after the pre-MG status is changed during the measurement period.

For measurements that can only be performed within MG( e.g. NR positioning measurements and CSI-RS inter-frequency measurements), measurement requirements would NOT apply if the pre-MG status change (activated →deactivated) during the measurement period.

### SYSTEMS AND IMPLEMENTATIONS

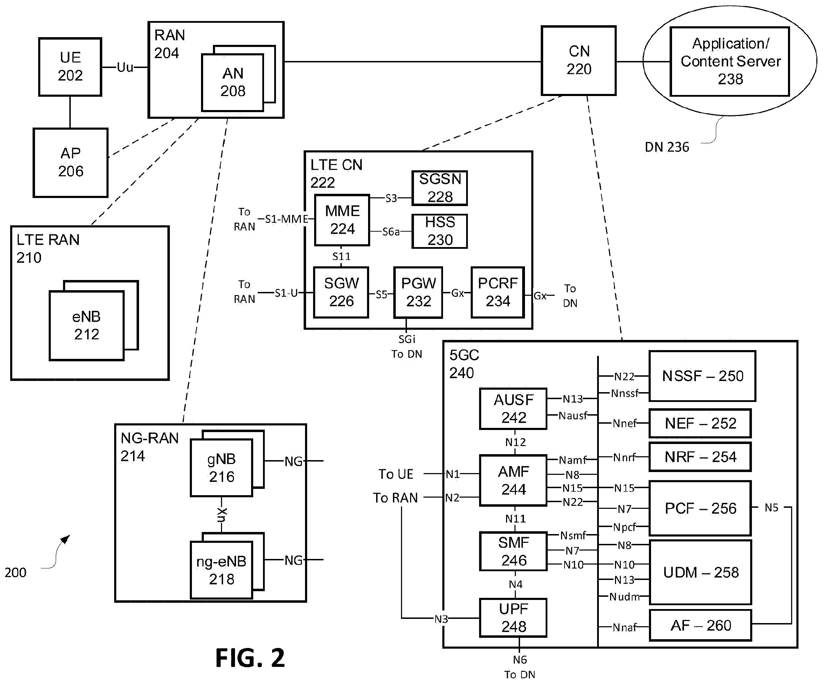

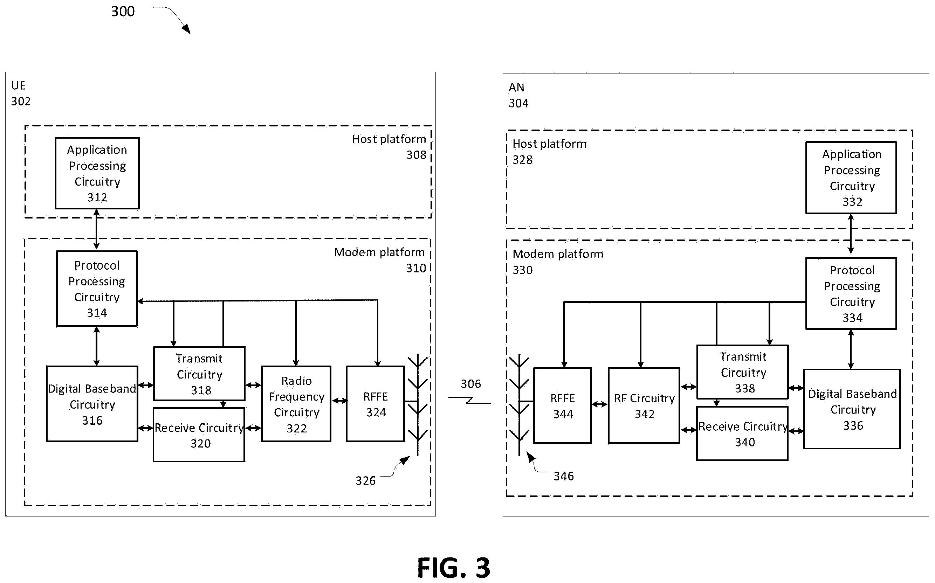

FIGs. 2-4 illustrate various systems, devices, and components that may implement aspects of disclosed embodiments.

FIGs. 2 illustrates a network 200 in accordance with various embodiments. The network 200 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 200 may include a UE 202, which may include any mobile or non-mobile computing device designed to communicate with a RAN 204 via an over-the-air connection. The UE 202 may be communicatively coupled with the RAN 204 by a Uu interface. The UE 202 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 200 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 202 may additionally communicate with an AP 206 via an over-the-air connection. The AP 206 may manage a WLAN connection, which may serve to offload some/all network traffic from the RAN 204. The connection between the UE 202 and the AP 206 may be consistent with any IEEE 802.11 protocol, wherein the AP 206 could be a wireless fidelity (Wi-Fi^{®}) router. In some embodiments, the UE 202, RAN 204, and AP 206 may utilize cellular-WLAN aggregation (for example, LWA/LWIP). Cellular-WLAN aggregation may involve the UE 202 being configured by the RAN 204 to utilize both cellular radio resources and WLAN resources.

The RAN 204 may include one or more access nodes, for example, AN 208. AN 208 may terminate air-interface protocols for the LTE 202 by providing access stratum protocols including RRC, PDCP, RLC, MAC, and L1 protocols. In this manner, the AN 208 may enable data/voice connectivity between CN 220 and the UE 202. In some embodiments, the AN 208 may be implemented in a discrete device or as one or more software entities running on server computers as part of, for example, a virtual network, which may be referred to as a CRAN or virtual baseband unit pool. The AN 208 be referred to as a BS, gNB, RAN node, eNB, ng-eNB, NodeB, RSU, TRxP, TRP, etc. The AN 208 may be a macrocell base station or a low power base station for providing femtocells, picocells or other like cells having smaller coverage areas, smaller user capacity, or higher bandwidth compared to macrocells.

In embodiments in which the RAN 204 includes a plurality of ANs, they may be coupled with one another via an X2 interface (if the RAN 204 is an LTE RAN) or an Xn interface (if the RAN 204 is a 5G RAN). The X2/Xn interfaces, which may be separated into control/user plane interfaces in some embodiments, may allow the ANs to communicate information related to handovers, data/context transfers, mobility, load management, interference coordination, etc. The ANs of the RAN 204 may each manage one or more cells, cell groups, component carriers, etc. to provide the UE 202 with an air interface for network access. The UE 202 may be simultaneously connected with a plurality of cells provided by the same or different ANs of the RAN 204. For example, the UE 202 and RAN 204 may use carrier aggregation to allow the UE 202 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 204 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the LTE 202 or AN 208 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 204 may be an LTE RAN 210 with eNBs, for example, eNB 212. The LTE RAN 210 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 204 may be an NG-RAN 214 with gNBs, for example, gNB 216, or ng-eNBs, for example, ng-eNB 218. The gNB 216 may connect with SG-enabled UEs using a 5G NR interface. The gNB 216 may connect with a 5G core through an NG interface, which may include an N2 interface or an N3 interface. The ng-eNB 218 may also connect with the 5G core through an NG interface, but may connect with a UE via an LTE air interface. The gNB 216 and the ng-eNB 218 may connect with each other over an Xn interface.

In some embodiments, the NG interface may be split into two parts, an NG user plane (NG-U) interface, which carries traffic data between the nodes of the NG-RAN 214 and a UPF 248 (e.g., N3 interface), and an NG control plane (NG-C) interface, which is a signaling interface between the nodes of the NG-RAN214 and an AMF 244 (e.g., N2 interface).

The NG-RAN 214 may provide a 5G-NR air interface with the following characteristics: variable SCS; CP-OFDM for DL, CP-OFDM and DFT-s-OFDM for LTL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 202 can be configured with multiple BWPs where each BWP configuration has a different SCS. When a BWP change is indicated to the UE 202, the SCS of the transmission is changed as well. Another use case example of BWP is related to power saving. In particular, multiple BWPs can be configured for the LTE 202 with different amount of frequency resources (for example, PRBs) to support data transmission under different traffic loading scenarios. A BWP containing a smaller number of PRBs can be used for data transmission with small traffic load while allowing power saving at the LTE 202 and in some cases at the gNB 216. A BWP containing a larger number of PRBs can be used for scenarios with higher traffic load.

The RAN 204 is communicatively coupled to CN 220 that includes network elements to provide various functions to support data and telecommunications services to customers/subscribers (for example, users of UE 202). The components of the CN 220 may be implemented in one physical node or separate physical nodes. In some embodiments, NFV may be utilized to virtualize any or all of the functions provided by the network elements of the CN 220 onto physical compute/storage resources in servers, switches, etc. A logical instantiation of the CN 220 may be referred to as a network slice, and a logical instantiation of a portion of the CN 220 may be referred to as a network sub-slice.

In some embodiments, the CN 220 may be an LTE CN 222, which may also be referred to as an EPC. The LTE CN 222 may include MME 224, SGW 226, SGSN 228, HSS 230, PGW 232, and PCRF 234 coupled with one another over interfaces (or "reference points") as shown. Functions of the elements of the LTE CN 222 may be briefly introduced as follows.

The MME 224 may implement mobility management functions to track a current location of the LTE 202 to facilitate paging, bearer activation/deactivation, handovers, gateway selection, authentication, etc.

The SGW 226 may terminate an S 1 interface toward the RAN and route data packets between the RAN and the LTE CN 222. The SGW 226 may be a local mobility anchor point for inter-RAN node handovers and also may provide an anchor for inter-3GPP mobility. Other responsibilities may include lawful intercept, charging, and some policy enforcement.

The SGSN 228 may track a location of the LTE 202 and perform security functions and access control. In addition, the SGSN 228 may perform inter-EPC node signaling for mobility between different RAT networks; PDN and S-GW selection as specified by MME 224; MME selection for handovers; etc. The S3 reference point between the MME 224 and the SGSN 228 may enable user and bearer information exchange for inter-3GPP access network mobility in idle/active states.

The HSS 230 may include a database for network users, including subscription-related information to support the network entities' handling of communication sessions. The HSS 230 can provide support for routing/roaming, authentication, authorization, naming/addressing resolution, location dependencies, etc. An S6a reference point between the HSS 230 and the MME 224 may enable transfer of subscription and authentication data for authenticating/authorizing user access to the LTE CN 220.

The PGW 232 may terminate an SGi interface toward a data network (DN) 236 that may include an application/content server 238. The PGW 232 may route data packets between the LTE CN 222 and the data network 236. The PGW 232 may be coupled with the SGW 226 by an S5 reference point to facilitate user plane tunneling and tunnel management. The PGW 232 may further include a node for policy enforcement and charging data collection (for example, PCEF). Additionally, the SGi reference point between the PGW 232 and the data network 236 may be an operator external public, a private PDN, or an intra-operator packet data network, for example, for provision of IMS services. The PGW 232 may be coupled with a PCRF 234 via a Gx reference point.

The PCRF 234 is the policy and charging control element of the LTE CN 222. The PCRF 234 may be communicatively coupled to the app/content server 238 to determine appropriate QoS and charging parameters for service flows. The PCRF 232 may provision associated rules into a PCEF (via Gx reference point) with appropriate TFT and QCI.

In some embodiments, the CN 220 may be a 5GC 240. The 5GC 240 may include an AUSF 242, AMF 244, SMF 246, UPF 248, NSSF 250, NEF 252, NRF 254, PCF 256, UDM 258, and AF 260 coupled with one another over interfaces (or "reference points") as shown. Functions of the elements of the 5GC 240 may be briefly introduced as follows.

The AUSF 242 may store data for authentication of LTE 202 and handle authentication-related functionality. The AUSF 242 may facilitate a common authentication framework for various access types. In addition to communicating with other elements of the 5GC 240 over reference points as shown, the AUSF 242 may exhibit an Nausf service-based interface.

The AMF 244 may allow other functions of the 5GC 240 to communicate with the UE 202 and the RAN 204 and to subscribe to notifications about mobility events with respect to the UE 202. The AMF 244 may be responsible for registration management (for example, for registering UE 202), connection management, reachability management, mobility management, lawful interception of AMF-related events, and access authentication and authorization. The AMF 244 may provide transport for SM messages between the UE 202 and the SMF 246, and act as a transparent proxy for routing SM messages. AMF 244 may also provide transport for SMS messages between UE 202 and an SMSF. AMF 244 may interact with the AUSF 242 and the UE 202 to perform various security anchor and context management functions. Furthermore, AMF 244 may be a termination point of a RAN CP interface, which may include or be an N2 reference point between the RAN 204 and the AMF 244; and the AMF 244 may be a termination point of NAS (N1) signaling, and perform NAS ciphering and integrity protection. AMF 244 may also support NAS signaling with the UE 202 over an N3 IWF interface.

The SMF 246 may be responsible for SM (for example, session establishment, tunnel management between UPF 248 and AN 208); UE IP address allocation and management (including optional authorization); selection and control of UP function; configuring traffic steering at UPF 248 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 244 over N2 to AN 208; and determining SSC mode of a session. SM may refer to management of a PDU session, and a PDU session or "session" may refer to a PDU connectivity service that provides or enables the exchange of PDUs between the LTE 202 and the data network 236.

The UPF 248 may act as an anchor point for intra-RAT and inter-RAT mobility, an external PDU session point of interconnect to data network 236, and a branching point to support multi-homed PDU session. The UPF 248 may also perform packet routing and forwarding, perform packet inspection, enforce the user plane part of policy rules, lawfully intercept packets (UP collection), perform traffic usage reporting, perform QoS handling for a user plane (e.g., packet filtering, gating, LTL/DL rate enforcement), perform uplink traffic verification (e.g., SDF-to-QoS flow mapping), transport level packet marking in the uplink and downlink, and perform downlink packet buffering and downlink data notification triggering. UPF 248 may include an uplink classifier to support routing traffic flows to a data network.

The NSSF 250 may select a set of network slice instances serving the UE 202. The NSSF 250 may also determine allowed NSSAI and the mapping to the subscribed S-NSSAIs, if needed. The NSSF 250 may also determine the AMF set to be used to serve the LTE 202, or a list of candidate AMFs based on a suitable configuration and possibly by querying the NRF 254. The selection of a set of network slice instances for the UE 202 may be triggered by the AMF 244 with which the LTE 202 is registered by interacting with the NSSF 250, which may lead to a change of AMF. The NSSF 250 may interact with the AMF 244 via an N22 reference point; and may communicate with another NSSF in a visited network via an N31 reference point (not shown). Additionally, the NSSF 250 may exhibit an Nnssf service-based interface.

The NEF 252 may securely expose services and capabilities provided by 3GPP network functions for third party, internal exposure/re-exposure, AFs (e.g., AF 260), edge computing or fog computing systems, etc. In such embodiments, the NEF 252 may authenticate, authorize, or throttle the AFs. NEF 252 may also translate information exchanged with the AF 260 and information exchanged with internal network functions. For example, the NEF 252 may translate between an AF-Service-Identifier and an internal 5GC information. NEF 252 may also receive information from other NFs based on exposed capabilities of other NFs. This information may be stored at the NEF 252 as structured data, or at a data storage NF using standardized interfaces. The stored information can then be re-exposed by the NEF 252 to other NFs and AFs, or used for other purposes such as analytics. Additionally, the NEF 252 may exhibit an Nnef service-based interface.

The NRF 254 may support service discovery functions, receive NF discovery requests from NF instances, and provide the information of the discovered NF instances to the NF instances. NRF 254 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 254 may exhibit the Nnrf service-based interface.

The PCF 256 may provide policy rules to control plane functions to enforce them, and may also support unified policy framework to govern network behavior. The PCF 256 may also implement a front end to access subscription information relevant for policy decisions in a UDR of the UDM 258. In addition to communicating with functions over reference points as shown, the PCF 256 exhibit an Npcf service-based interface.

The UDM 258 may handle subscription-related information to support the network entities' handling of communication sessions, and may store subscription data of UE 202. For example, subscription data may be communicated via an N8 reference point between the UDM 258 and the AMF 244. The UDM 258 may include two parts, an application front end and a UDR. The UDR may store subscription data and policy data for the UDM 258 and the PCF 256, and/or structured data for exposure and application data (including PFDs for application detection, application request information for multiple UEs 202) for the NEF 252. The Nudr service-based interface may be exhibited by the UDR 221 to allow the UDM 258, PCF 256, and NEF 252 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 258 may exhibit the Nudm service-based interface.

The AF 260 may provide application influence on traffic routing, provide access to NEF, and interact with the policy framework for policy control.

In some embodiments, the 5GC 240 may enable edge computing by selecting operator/3^{rd} party services to be geographically close to a point that the LTE 202 is attached to the network. This may reduce latency and load on the network. To provide edge-computing implementations, the 5GC 240 may select a UPF 248 close to the UE 202 and execute traffic steering from the UPF 248 to data network 236 via the N6 interface. This may be based on the LTE subscription data, LTE location, and information provided by the AF 260. In this way, the AF 260 may influence UPF (re)selection and traffic routing. Based on operator deployment, when AF 260 is considered to be a trusted entity, the network operator may permit AF 260 to interact directly with relevant NFs. Additionally, the AF 260 may exhibit an Naf service-based interface.

The data network 236 may represent various network operator services, Internet access, or third party services that may be provided by one or more servers including, for example, application/content server 238.

FIG. 2 schematically illustrates a wireless network 300 in accordance with various embodiments. The wireless network 300 may include a LTE 302 in wireless communication with an AN 304. The UE 302 and AN 304 may be similar to, and substantially interchangeable with, like-named components described elsewhere herein.

The UE 302 may be communicatively coupled with the AN 304 via connection 306. The connection 306 is illustrated as an air interface to enable communicative coupling, and can be consistent with cellular communications protocols such as an LTE protocol or a 5G NR protocol operating at mmWave or sub-6GHz frequencies.

The UE 302 may include a host platform 308 coupled with a modem platform 310. The host platform 308 may include application processing circuitry 312, which may be coupled with protocol processing circuitry 314 of the modem platform 310. The application processing circuitry 312 may run various applications for the UE 302 that source/sink application data. The application processing circuitry 312 may further implement one or more layer operations to transmit/receive application data to/from a data network. These layer operations may include transport (for example UDP) and Internet (for example, IP) operations

The protocol processing circuitry 314 may implement one or more of layer operations to facilitate transmission or reception of data over the connection 306. The layer operations implemented by the protocol processing circuitry 314 may include, for example, MAC, RLC, PDCP, RRC and NAS operations.

The modem platform 310 may further include digital baseband circuitry 316 that may implement one or more layer operations that are "below" layer operations performed by the protocol processing circuitry 314 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 310 may further include transmit circuitry 318, receive circuitry 320, RF circuitry 322, and RF front end (RFFE) 324, which may include or connect to one or more antenna panels 326. Briefly, the transmit circuitry 318 may include a digital-to-analog converter, mixer, intermediate frequency (IF) components, etc.; the receive circuitry 320 may include an analog-to-digital converter, mixer, IF components, etc.; the RF circuitry 322 may include a low-noise amplifier, a power amplifier, power tracking components, etc.; RFFE 324 may include filters (for example, surface/bulk acoustic wave filters), switches, antenna tuners, beamforming components (for example, phase-array antenna components), etc. The selection and arrangement of the components of the transmit circuitry 318, receive circuitry 320, RF circuitry 322, RFFE 324, and antenna panels 326 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 314 may include one or more instances of control circuitry (not shown) to provide control functions for the transmit/receive components.

A UE reception may be established by and via the antenna panels 326, RFFE 324, RF circuitry 322, receive circuitry 320, digital baseband circuitry 316, and protocol processing circuitry 314. In some embodiments, the antenna panels 326 may receive a transmission from the AN 304 by receive-beamforming signals received by a plurality of antennas/antenna elements of the one or more antenna panels 326.

A UE transmission may be established by and via the protocol processing circuitry 314, digital baseband circuitry 316, transmit circuitry 318, RF circuitry 322, RFFE 324, and antenna panels 326. In some embodiments, the transmit components of the UE 304 may apply a spatial filter to the data to be transmitted to form a transmit beam emitted by the antenna elements of the antenna panels 326.

Similar to the UE 302, the AN 304 may include a host platform 328 coupled with a modem platform 330. The host platform 328 may include application processing circuitry 332 coupled with protocol processing circuitry 334 of the modem platform 330. The modem platform may further include digital baseband circuitry 336, transmit circuitry 338, receive circuitry 340, RF circuitry 342, RFFE circuitry 344, and antenna panels 346. The components of the AN 304 may be similar to and substantially interchangeable with like-named components of the UE 302. In addition to performing data transmission/reception as described above, the components of the AN 308 may perform various logical functions that include, for example, RNC functions such as radio bearer management, uplink and downlink dynamic radio resource management, and data packet scheduling.

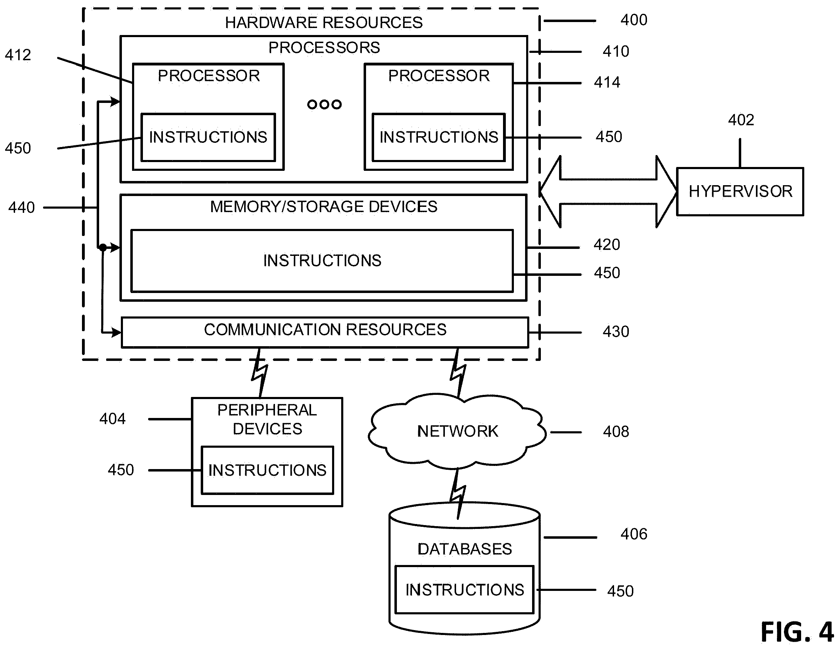

FIG. 4 is a block diagram illustrating components, according to some example embodiments, able to read instructions from a machine-readable or computer-readable medium (e.g., a non-transitory machine-readable storage medium) and perform any one or more of the methodologies discussed herein. Specifically, Fig. 4 shows a diagrammatic representation of hardware resources 400 including one or more processors (or processor cores) 410, one or more memory/storage devices 420, and one or more communication resources 430, each of which may be communicatively coupled via a bus 440 or other interface circuitry. For embodiments where node virtualization (e.g., NFV) is utilized, a hypervisor 402 may be executed to provide an execution environment for one or more network slices/sub-slices to utilize the hardware resources 400.

The processors 410 may include, for example, a processor 412 and a processor 414. The processors 410 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 420 may include main memory, disk storage, or any suitable combination thereof. The memory/storage devices 420 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 430 may include interconnection or network interface controllers, components, or other suitable devices to communicate with one or more peripheral devices 404 or one or more databases 406 or other network elements via a network 408. For example, the communication resources 430 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 450 may comprise software, a program, an application, an applet, an app, or other executable code for causing at least any of the processors 410 to perform any one or more of the methodologies discussed herein. The instructions 450 may reside, completely or partially, within at least one of the processors 410 (e.g., within the processor's cache memory), the memory/storage devices 420, or any suitable combination thereof. Furthermore, any portion of the instructions 450 may be transferred to the hardware resources 400 from any combination of the peripheral devices 404 or the databases 406. Accordingly, the memory of processors 410, the memory/storage devices 420, the peripheral devices 404, and the databases 406 are examples of computer-readable and machine-readable media.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a LTE, base station, network element, etc. as described above in connection with one or more of the preceding figures may be configured to operate in accordance with one or more of the examples set forth below in the example section.

### EXAMPLES

Example 1 may include a method of LTE behavior when pre-configured gap is used for UE's measurement.

Example 2 may include the method of example 1 or some other example herein, wherein the pre-configured gap status is switched between activated and deactivated during a measurement period.

Example 3 may include the method of example 2 or some other example herein, wherein UE can restart the new measurement period when the pre-configured gap status changed.

Example 4 may include the method of example 2 or some other example herein, wherein UE can continue the ongoing measurement period when the pre-configured gap status changed.

Example 5 may include the method of example 2 or some other example herein, wherein UE shall meet the measurement period requirements.

Example 6 may include the method of example 5 or some other example herein, wherein the requirements of measurement period for the measurements which can be performed within and wo gap can be start from the first measurement samples after the pre-MG status is changed during the measurement period.

Example 7 may include the method of example 5 or some other example herein, wherein the requirements of measurement period for the measurements which can be performed within and wo gap can be taken these with gap.

Example 8 may include the method of example 5 or some other example herein, wherein the requirements of measurement period for the measurements which can be performed within gap can be not applicable.

Example 9 may include a method of a LTE, the method comprising:
receiving a configuration of a measurement gap;
receiving during a measurement period of the measurement gap, an indication that a status of the measurement gap is changed; and
performing one or more measurements based on the configuration and the indication.

Example 10 may include the method of example 9 or some other example herein, wherein the measurement period is restarted based on the indication.

Example 11 may include the method of example 9 or some other example herein, wherein the measurement period is continued based on the indication.

Example 12 may include an apparatus comprising means to perform one or more elements of a method described in or related to any of examples 1-11, or any other method or process described herein.

Example 13 may include one or more non-transitory computer-readable media comprising instructions to cause an electronic device, upon execution of the instructions by one or more processors of the electronic device, to perform one or more elements of a method described in or related to any of examples 1-11, or any other method or process described herein.

Example 14 may include an apparatus comprising logic, modules, or circuitry to perform one or more elements of a method described in or related to any of examples 1-11, or any other method or process described herein.

Example 15 may include a method, technique, or process as described in or related to any of examples 1-11, or portions or parts thereof.

Example 16 may include an apparatus comprising: one or more processors and one or more computer-readable media comprising instructions that, when executed by the one or more processors, cause the one or more processors to perform the method, techniques, or process as described in or related to any of examples 1-11, or portions thereof.

Example 17 may include a signal as described in or related to any of examples 1-11, or portions or parts thereof.

Example 18 may include a datagram, packet, frame, segment, protocol data unit (PDU), or message as described in or related to any of examples 1-11, or portions or parts thereof, or otherwise described in the present disclosure.

Example 19 may include a signal encoded with data as described in or related to any of examples 1-11, or portions or parts thereof, or otherwise described in the present disclosure.

Example 20 may include a signal encoded with a datagram, packet, frame, segment, protocol data unit (PDU), or message as described in or related to any of examples 1-11, or portions or parts thereof, or otherwise described in the present disclosure.

Example 21 may include an electromagnetic signal carrying computer-readable instructions, wherein execution of the computer-readable instructions by one or more processors is to cause the one or more processors to perform the method, techniques, or process as described in or related to any of examples 1-11, or portions thereof.

Example 22 may include a computer program comprising instructions, wherein execution of the program by a processing element is to cause the processing element to carry out the method, techniques, or process as described in or related to any of examples 1-11, or portions thereof.

Example 23 may include a signal in a wireless network as shown and described herein.

Example 24 may include a method of communicating in a wireless network as shown and described herein.

Example 25 may include a system for providing wireless communication as shown and described herein.

Example 26 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

| | | |
|---|---|---|
| 3GPP Third Generation Partnership Project | AWGN Additive White Noise Gaussian | CDMA-MultipleAccess |
| 4G Fourth Generation | | |
| 5G Fifth Generation | BAP Backhaul Adaptation Protocol | CDR Charging DataRequest |
| 5GC 5G Core network | | |
| AC Application Client | BCH Broadcast Channel | CDR Charging DataResponse |
| | BER Bit Error Ratio | |
| ACR Application Context Relocation | BFD Beam Failure Detection | CFRA Contention FreeRandom Access |
| ACK Acknowledgement | BLER Block Error Rate | CG Cell Group |
| ACID Application Client Identification | BPSK Binary Phase Shift Keying | CGF ChargingGateway Function |
| AF Application Function | BRAS Broadband Remote Access Server | CHF Charging Function |
| AM Acknowledged Mode AMBR Aggregate Maximum Bit Rate | BSS Business Support System | CI Cell Identity |
| | | CID Cell-ID (e.g., positioning method) |
| | BS Base Station | |
| | BSR Buffer Status Report | CIM Common Information Model |
| AMF Access and Mobility Management Function | | |
| | BW Bandwidth | CIR Carrier to Interference Ratio |
| | BWP Bandwidth Part | |
| | C-RNTI Cell Radio Network Temporary Identity | CK Cipher Key |
| AN Access Network | | CM ConnectionManagement, Conditional Mandatory |
| ANR Automatic Neighbour Relation | | |
| | CA Carrier Aggregation, Certification Authority | |
| AOA Angle of Arrival | | CMAS Commercial Mobile Alert Service |
| AP Application Protocol, Antenna Port, Access Point | | CMD Command |
| | CAPEX CAPital EXpenditure | CMS Cloud ManagementSystem |
| API Application Programming Interface | CBRA Contention Based Random Access | CO Conditional Optional |
| APN Access Point Name | CC Component Carrier, Country Code, Cryptographic Checksum | CoMP Coordinated Multi-Point |
| ARP Allocation and Retention Priority | | |
| | | CORESET ControlResource Set |
| ARQ Automatic Repeat Request | | |
| | CCA Clear Channel Assessment | COTS Commercial Off-The-Shelf |
| AS Access Stratum | | |
| ASP Application Service Provider | CCE Control Channel Element CCCH Common Control Channel | CP Control Plane,Cyclic Point Prefix, Connection |
| | | |
| | | |
| ASN.1 Abstract Syntax Notation One | | CPD Connection Point Descriptor |
| | CE Coverage Enhancement | |
| AUSF Authentication Server Function | | CPE Customer Premise Equipment |
| | CDM Content Delivery Network | |
| CPICH Common Pilot Channel | CSMA/CA CSMA with collision avoidance | E2E End-to-End |
| | | EAS Edge Application Server |
| CQI Channel Quality Indicator | CSS Common Search Space, Cell- specificSearch Space | |
| | | ECCA extended clearchannel assessment,extended CCA |
| CPU CSI processing unit, Central Processing Unit | | |
| | CTF Charging Trigger Function | |
| | | ECCE Enhanced ControlChannel Element,Enhanced CCE |
| C/R Command/Response field bit | CTS Clear-to-Send | |
| | CW Codeword | |
| | CWS Contention Window Size | ED Energy Detection |
| CRAN Cloud Radio Access Network, Cloud RAN | | EDGE Enhanced Dataratesfor GSM Evolution (GSM Evolution) |
| | D2D Device-to-Device | |
| | DC Dual Connectivity, Direct Current | |
| CRB Common Resource Block | | EAS Edge Application Server |
| | DCI Downlink Control Information | |
| CRC Cyclic Redundancy Check | | EASID Edge Application Server Identification |
| | DF Deployment Flavour | |
| CRI Channel-State Information ResourceIndicator, CSI-RS | | |
| | DL Downlink | ECS EdgeConfiguration Server |
| | DMTF Distributed Management Task Force | |
| Resource Indicator | | ECSP EdgeComputing Service Provider |
| C-RNTI Cell RNTI | DPDK Data Plane Development Kit | |
| CS Circuit Switched | | |
| CSCF call session control function | DM-RS, DMRS Demodulation Reference Signal | EDN Edge DataNetwork |
| CSAR Cloud Service Archive | | EEC EdgeEnabler Client |
| | DN Data network | |
| CSI Channel-State Information | DNN Data Network Name | EECID EdgeEnabler Client Identification |
| CSI-IM CSI Interference Measurement | DNAI Data Network Access Identifier | EES EdgeEnabler Server |
| | | |
| CSI-RS CSI Reference Signal | DRB Data Radio Bearer | EESID EdgeEnabler Server Identification |
| | DRS Discovery Reference Signal | |
| CSI-RSRP CSI reference signal received power | | |
| | DRX Discontinuous Reception | EHE Edge Hosting Environment |
| CSI-RSRQ CSI reference signal received quality | DSL Domain Specific Language. Subscriber Digital Line | EGMF Exposure Governance ManagementFunction |
| CSI-SINR CSI signal- to-noise and interference ratio | DSLAM DSL Access Multiplexer | |
| | DwPTS Downlink Pilot Time Slot | EGPRS Enhanced GPRS |
| CSMA Carrier Sense Multiple Access | | EIR Equipment Identity Register |
| | E-LAN Ethernet Local Area Network | |
| eLAA enhanced Licensed Assisted Access, enhanced LAA | FACCH Fast Associated Control CHannel | G-RNTI GERAN Radio Network Temporary Identity |
| EM Element Manager | FACCH/F Fast Associated Control Channel/Full rate | GERAN |
| eMBB Enhanced Mobile Broadband | | GSM EDGE RAN, |
| | | GSM EDGE Radio |
| EMS Element | FACCH/H Fast | Access Network |
| Management System eNB evolved NodeB, E- | Associated Control Channel/Half rate | GGSN Gateway GPRS Support Node |
| UTRAN Node B | FACH Forward Access | GLONASS GLObal'naya NAvigatsionnaya Sputnikovaya |
| EN-DC E-UTRA-NR Dual Connectivity | Channel | |
| | FAUSCH Fast Uplink Signalling Channel | |
| EPC Evolved Packet Core | FB Functional Block | Sistema (Engl.: Global Navigation Satellite System) |
| | FBI Feedback Information | |
| EPDCCH enhanced | | |
| PDCCH, enhanced Physical Downlink Control Cannel | FCC Federal Communications | gNB Next Generation NodeB |
| | Commission | gNB-CU gNB- |
| EPRE Energy per resource element | FCCH Frequency Correction CHannel | centralized unit, Next Generation NodeB centralized unit |
| EPS Evolved Packet System | FDD Frequency Division Duplex | |
| | | gNB-DU gNB- distributed unit, Next |
| EREG enhanced REG, enhanced resource element groups | FDM Frequency Division Multiplex | |
| | | Generation NodeB distributed unit |
| | FDMAFrequency Division Multiple Access | |
| ETSI European Telecommunication s Standards Institute | | GNSS Global Navigation |
| | FE Front End | Satellite System |
| | FEC Forward Error Correction | GPRS General Packet |
| ETWS Earthquake and | | Radio Service |
| Tsunami Warning | FFS For Further Study | GPSI Generic |
| System eUICC embedded UICC, | FFT Fast Fourier Transformation | Public Subscription Identifier |
| embedded Universal Integrated Circuit Card | feLAA further enhanced Licensed Assisted | GSM Global System for Mobile |
| E-UTRA Evolved | Access, further enhanced LAA | Communications, Groupe Spécial Mobile |
| UTRA | | |
| E-UTRAN Evolved | FN Frame Number | |
| UTRAN | FPGA Field-Programmable Gate Array | GTP GPRS Tunneling |
| EV2X Enhanced V2X | | Protocol |
| F1AP F1 Application | | GTP-UGPRS Tunnelling |
| Protocol | FR Frequency Range | Protocol for User |
| F1-C F1 Control plane | FQDN Fully Qualified | Plane |
| interface | Domain Name | GTS Go To Sleep Signal |
| F1-U F1 User plane interface | | (related to WUS) |
| GUMMEI Globally Unique MME Identifier | IDFT Inverse Discrete Fourier Transform | IP-CAN IP-Connectivity Access Network |
| GUTI Globally Unique | IE Information | |
| Temporary UE Identity | element | IP-M IP Multicast |
| HARQ Hybrid ARQ, Hybrid Automatic | IBE In-Band Emission | IPv4 Internet Protocol Version 4 |
| Repeat Request | IEEE Institute of Electrical and Electronics Engineers | IPv6 Internet Protocol Version 6 |
| HANDO Handover | | |
| HFN HyperFrame | | IR Infrared |
| Number | IEI Information Element Identifier | IS In Sync |
| HHO Hard Handover | | IRP Integration Reference Point |
| HLR Home Location Register | IEIDL Information | |
| | Element Identifier | ISDN Integrated Services |
| HN Home Network | Data Length | Digital Network |
| HO Handover | IETF Internet | ISIM IM Services Identity Module |
| HPLMN Home | Engineering Task Force | |
| Public Land Mobile Network | | ISO International |
| | IF Infrastructure | Organisation for |
| HSDPA High Speed Downlink Packet Access | IIOT Industrial Internet of Things | Standardisation |
| | | ISP Internet Service |
| | IM Interference Measurement, Intermodulation, IP Multimedia | Provider |
| HSN Hopping Sequence Number | | IWF Interworking-Function |
| HSPA High Speed Packet Access | | I-WLAN Interworking |
| | IMC IMS Credentials | |
| HSS Home Subscriber | IMEI International | WLAN |
| Server | Mobile Equipment | Constraint length of the convolutional code, |
| HSUPA High Speed | Identity | |
| Uplink Packet Access | IMGI International | USIM Individual key |
| HTTP Hyper Text | mobile group identity | kB Kilobyte (1000 bytes) |
| Transfer Protocol | IMPI IP Multimedia | |
| HTTPS Hyper Text | Private Identity | kbps kilo-bits per second |
| Transfer Protocol | IMPU IP Multimedia | Kc Ciphering key |
| Secure (https is http/1.1 over SSL, i.e. port 443) | PUblic identity | Ki Individual subscriber authentication key |
| | IMS IP Multimedia Subsystem | |
| I-Block Information Block | IMSI International | KPI Key Performance Indicator |
| | Mobile Subscriber | |
| ICCID Integrated Circuit | Identity | KQI Key Quality Indicator |
| Card Identification | IoT Internet of Things | |
| IAB Integrated Access | IP Internet Protocol | KSI Key Set Identifier |
| and Backhaul | Ipsec IP Security, | ksps kilo-symbols per second |
| ICIC Inter-Cell | Internet Protocol Security | |
| Interference Coordination | | KVM Kernel Virtual Machine |
| ID Identity, identifier | | |
| L1 Layer 1 (physical layer) | M2M Machine-to-Machine | MGRP Measurement Gap Repetition Period |
| L1-RSRP Layer 1 reference signal received power | MAC Medium Access Control (protocol layering context) | MIB Master Information Block, Management Information Base |
| L2 Layer 2 (data link layer) | MAC Message authentication code | MIMO Multiple Input Multiple Output |
| L3 Layer 3 (network layer) | (security/encryption context) | MLC Mobile Location Centre |
| LAA Licensed Assisted Access | MAC-A MAC used for authentication and | MM Mobility Management |
| LAN Local Area Network | key agreement (TSG T WG3 context) | MME Mobility Management Entity |
| LADN Local Area Data Network | MAC-IMAC used for data integrity of signalling messages (TSG T WG3 context) | MN Master Node |
| | | MNO Mobile Network Operator |
| LBT Listen Before Talk | | |
| LCM LifeCycle Management | | MO Measurement Object, Mobile Originated |
| | MANO Management and Orchestration | |
| LCR Low Chip Rate | | |
| LCS Location Services | | MPBCH MTC |
| LCID Logical Channel ID | MBMS Multimedia Broadcast and Multicast | Physical Broadcast CHannel |
| LI Layer Indicator | Service | MPDCCH MTC Physical Downlink Control CHannel |
| LLC Logical Link Control, Low Layer Compatibility | MBSFN Multimedia | |
| | Broadcast multicast service Single Frequency Network | |
| | | MPDSCH MTC Physical Downlink Shared CHannel |
| LMF Location Management Function | | |
| | MCC Mobile Country | |
| LOS Line of | Code | MPRACH MTC |
| Sight | MCG Master Cell Group | Physical Random Access CHannel |
| LPLMN Local PLMN | MCOTMaximum Channel Occupancy Time | |
| | | MPUSCH MTC |
| LPP LTE Positioning Protocol | MCS Modulation and coding scheme | Physical Uplink Shared Channel |
| LSB Least Significant Bit | MDAF Management Data Analytics Function | MPLS MultiProtocol Label Switching |
| LTE Long Term | MDAS Management Data Analytics Service | MS Mobile Station |
| Evolution | | MSB Most Significant Bit |
| LWA LTE-WLAN aggregation | MDT Minimization of Drive Tests | |
| | | MSC Mobile Switching Centre |
| LWIP LTE/WLAN Radio | ME Mobile Equipment | |
| Level Integration with | MeNB master eNB | MSI Minimum System Information, MCH Scheduling Information |
| IPsec Tunnel | MER Message Error | |
| LTE Long Term Evolution | Ratio MGL Measurement Gap | |
| | Length | |
| MSID Mobile Station Identifier | NFV Network Functions Virtualization | NSA Non-Standalone operation mode |
| MSIN Mobile Station Identification Number | NFVI NFV Infrastructure | NSD Network Service |
| | NFVO NFV Orchestrator | Descriptor |
| | NG Next Generation, Next Gen | NSR Network Service |
| MSISDN Mobile | | Record |
| Subscriber ISDN Number | NGEN-DC NG-RAN | NSSAINetwork Slice Selection Assistance Information |
| | E-UTRA-NR Dual Connectivity | |
| MT Mobile Terminated, | | |
| Mobile Termination | NM Network Manager | S-NNSAI Single- |
| MTC Machine-Type Communications mMTCmassive MTC, massive Machine-Type Communications | NMS Network | NSSAI |
| | Management System N-PoP Network Point of | NSSF Network Slice Selection Function |
| | Presence | NW Network |
| | NMIB, N-MIB | NWUSNarrowband wake- |
| MU-MIMO Multi User | Narrowband MIB | up signal, Narrowband |
| MIMO | NPBCH Narrowband | WUS |
| MWUS MTC wake-up signal, MTC | Physical Broadcast CHannel | NZP Non-Zero Power O&M Operation and |
| WUS | NPDCCH Narrowband | Maintenance |
| NACK Negative Acknowledgement | Physical Downlink Control CHannel | ODU2 Optical channel Data Unit - type 2 |
| NAI Network Access | NPDSCH Narrowband | OFDM Orthogonal |
| Identifier NAS Non-Access | Physical Downlink Shared CHannel | Frequency Division Multiplexing |
| Stratum, Non- Access Stratum layer | NPRACH Narrowband | OFDMA Orthogonal |
| | Physical Random Access CHannel | Frequency Division Multiple Access |
| NCT Network | | |
| Connectivity Topology | NPUSCH Narrowband | OOB Out-of-band |
| NC-JT Non-Coherent Joint Transmission | Physical Uplink | OOS Out of Sync |
| | Shared CHannel | OPEX OPerating EXpense |
| | NPSS Narrowband Primary Synchronization Signal | OSI Other System Information |
| NEC Network Capability Exposure | | |
| | | OSS Operations Support System |
| NE-DC NR-E-UTRA Dual Connectivity | | |
| | NSSS Narrowband | OTA over-the-air |
| | Secondary | PAPR Peak-to-Average Power Ratio |
| NEF Network Exposure Function | Synchronization Signal | |
| | | PAR Peak to Average Ratio |
| NF Network Function | NR New Radio, | |
| NFP Network | Neighbour Relation | PBCH Physical Broadcast Channel |
| Forwarding Path | NRF NF Repository Function | |
| NFPD Network | | PC Power Control, Personal Computer |
| Forwarding Path Descriptor | NRS Narrowband Reference Signal | |
| | NS Network Service | |
| PCC Primary Component Carrier, Primary CC | PIN Personal Identification Number | PSS Primary Synchronization Signal |
| | PM Performance Measurement | |
| P-CSCF Proxy | | PSTN Public Switched Telephone Network |
| CSCF | PMI Precoding Matrix Indicator | |
| PCell Primary Cell | | PT-RS Phase-tracking |
| PCI Physical Cell ID, Physical Cell Identity | PNF Physical Network Function | reference signal |
| | | PTT Push-to-Talk |
| | PNFD Physical Network Function Descriptor | PUCCH Physical |
| PCEF Policy and Charging Enforcement Function | | Uplink Control Channel |
| | PNFR Physical Network Function Record | |
| | | PUSCH Physical |
| | POC PTT over Cellular | Uplink Shared Channel |
| PCF Policy Control Function | PP, PTP Point-to-Point | |
| | | QAM Quadrature Amplitude Modulation |
| PCRF Policy Control and Charging Rules Function | PPP Point-to-Point Protocol | |
| | | QCI QoS class of identifier |
| | PRACH Physical RACH | |
| PDCP Packet Data Convergence Protocol, Packet Data Convergence | | QCL Quasi co-location |
| | PRB Physical resource block | QFI QoS Flow ID, QoS |
| | | Flow Identifier |
| | PRG Physical resource block group | QoS Quality of Service |
| Protocol layer | | QPSK Quadrature (Quaternary) Phase Shift Keying |
| PDCCH Physical Downlink Control Channel | ProSe Proximity Services, Proximity-Based Service | |
| | | QZSS Quasi-Zenith |
| PDCP Packet Data Convergence Protocol | PRS Positioning Reference Signal | Satellite System |
| | | RA-RNTI Random |
| PDN Packet Data Network, Public Data Network | PRR Packet Reception Radio | Access RNTI |
| | | RAB Radio Access |
| | PS Packet Services | Bearer, Random |
| PDSCH Physical | PSBCH Physical | Access Burst |
| Downlink Shared Channel | Sidelink Broadcast Channel | RACH Random Access Channel |
| PDU Protocol Data Unit | PSDCH Physical | RADIUS Remote |
| PEI Permanent Equipment Identifiers | Sidelink Downlink Channel | Authentication Dial In User Service |
| PFD Packet Flow Description | PSCCH Physical Sidelink Control Channel | RAN Radio Access Network |
| P-GW PDN Gateway | | RAND RANDom number (used for authentication) |
| PHICH Physical | PSSCH Physical Sidelink Shared Channel | |
| hybrid-ARQ indicator | | |
| channel | | RAR Random Access |
| PHY Physical layer | PSCell Primary SCell | Response |
| PLMN Public Land Mobile Network | | RAT Radio Access Technology |
| RAU Routing Area Update | RRM Radio Resource Management | SCEF Service Capability Exposure Function |
| RB Resource block, Radio Bearer | RS Reference Signal | |
| | RSRP Reference Signal | SC-FDMA Single Carrier Frequency Division Multiple Access |
| RBG Resource block group | Received Power | |
| | RSRQ Reference Signal Received Quality | |
| REG Resource Element | | |
| Group | RSSI Received Signal Strength Indicator | SCG Secondary Cell Group |
| Rel Release | | |
| REQ REQuest | RSU Road Side Unit | SCM Security Context |
| RF Radio Frequency | RSTD Reference Signal Time difference | Management |
| RI Rank Indicator | | SCS Subcarrier Spacing |
| RIV Resource indicator value | RTP Real Time Protocol | SCTP Stream Control Transmission Protocol |
| | RTS Ready-To-Send | |
| RL Radio Link | RTT Round Trip Time | |
| RLC Radio Link Control, Radio Link Control layer | Rx Reception, Receiving, Receiver | SDAP Service Data |
| | | Adaptation Protocol, |
| | S1AP S1 Application Protocol | Service Data Adaptation |
| RLC AM RLC | | Protocol layer |
| Acknowledged Mode | S1-MME S1 for the control plane | SDL Supplementary Downlink |
| RLC UM RLC | | |
| Unacknowledged Mode | S1-U S1 for the user plane | SDNF Structured Data |
| RLF Radio Link Failure | | Storage Network Function |
| RLM Radio Link | S-CSCF serving | |
| Monitoring | CSCF | SDP Session Description |
| RLM-RS Reference | S-GW Serving Gateway | Protocol |
| Signal for RLM | S-RNTI SRNC | SDSF Structured Data Storage Function |
| RM Registration | Radio Network | |
| Management | Temporary Identity | SDT Small Data Transmission |
| RMC Reference | S-TMSI SAE | |
| Measurement Channel | Temporary Mobile | SDU Service Data Unit |
| RMSI Remaining MSI, | Station Identifier | SEAF Security Anchor |
| Remaining Minimum | SA Standalone | Function |
| System Information | operation mode | SeNB secondary eNB |
| RN Relay Node | SAE System | SEPP Security Edge |
| RNC Radio Network Controller | Architecture Evolution | Protection Proxy |
| | SAP Service Access Point | SFI Slot format |
| RNL Radio Network Layer | | indication |
| | SAPD Service Access | SFTD Space-Frequency |
| RNTI Radio Network | Point Descriptor | Time Diversity, SFN and |
| Temporary Identifier | SAPI Service Access | frame timing difference |
| ROHC RObust Header Compression | Point Identifier | SFN System Frame Number |
| | SCC Secondary Component Carrier, | |
| RRC Radio Resource Control, Radio | | SgNB Secondary gNB |
| | Secondary CC | SGSN Serving GPRS |
| Resource Control layer | SCell Secondary Cell | Support Node |
| S-GW Serving Gateway | SS/PBCH Block | TBS Transport Block |
| SI System Information | SSBRI SS/PBCH Block | Size |
| SI-RNTI System | Resource Indicator, | TBD To Be Defined |
| Information RNTI | Synchronization | TCI Transmission |
| SIB System Information | Signal Block | Configuration Indicator |
| Block | Resource Indicator | TCP Transmission |
| SIM Subscriber Identity Module | SSC Session and Service Continuity | Communication Protocol |
| SIP Session Initiated Protocol | SS-RSRP Synchronization Signal based Reference Signal Received Power | TDD Time Division Duplex |
| SiP System in Package | | TDM Time Division |
| SL Sidelink | | Multiplexing |
| SLA Service Level Agreement | | TDMATime Division |
| | SS-RSRQ Synchronization Signal based Reference | Multiple Access |
| SM Session Management | | TE Terminal Equipment |
| SMF Session Management Function | Signal Received Quality | TEID Tunnel End Point Identifier |
| SMS Short Message Service | SS-SINR Synchronization | TFT Traffic Flow Template |
| SMSF SMS Function SMTC SSB-based | Signal based Signal to Noise and Interference Ratio | TMSI Temporary Mobile Subscriber Identity |
| Measurement Timing Configuration | | TNL Transport Network Layer |
| | SSS Secondary | |
| SN Secondary Node, Sequence Number | Synchronization Signal | TPC Transmit Power Control |
| SoC System on Chip | SSSG Search Space Set Group | TPMI Transmitted Precoding Matrix Indicator |
| SON Self-Organizing Network | | |
| | SSSIF Search Space Set Indicator | |
| SpCell Special Cell | | TR Technical Report |
| SP-CSI-RNTISemi- | SST Slice/Service Types | TRP, TRxP Transmission |
| Persistent CSI RNTI | SU-MIMO Single User | |
| SPS Semi-Persistent | MIMO | Reception Point |
| Scheduling | SUL Supplementary Uplink | TRS Tracking Reference Signal |
| SQN Sequence number | | |
| SR Scheduling Request | TA Timing Advance, Tracking Area | TRx Transceiver |
| SRB Signalling Radio | | TS Technical Specifications, Technical Standard |
| Bearer | TAC Tracking Area Code | |
| SRS Sounding Reference Signal | | |
| | TAG Timing Advance | TTI Transmission Time Interval |
| SS Synchronization Signal | Group | |
| | TAI Tracking Area Identity | Tx Transmission, Transmitting, Transmitter |
| SSB Synchronization Signal Block | | |
| | TAU Tracking Area Update | |
| SSID Service Set Identifier | | |
| | TB Transport Block | |
| U-RNTI UTRAN Radio Network Temporary Identity | UTRAN Universal Terrestrial Radio Access Network | WPANWireless Personal |
| | | Area Network |
| | | X2-C X2-Control plane |
| UART Universal Asynchronous Receiver and Transmitter | UwPTS Uplink Pilot Time Slot | X2-U X2-User plane |
| | | XML eXtensible Markup Language |
| | V2I Vehicle-to-Infrastruction | |
| | | XRES EXpected user RESponse |
| UCI Uplink Control Information | V2P Vehicle-to-Pedestrian | |
| | | XOR eXclusive OR |
| LTE User Equipment | V2V Vehicle-to-Vehicle | ZC Zadoff-Chu |
| UDM Unified Data Management | V2X Vehicle-to-everything | ZP Zero Power |
| UDP User Datagram Protocol | VIM Virtualized Infrastructure Manager | |
| UDSF Unstructured Data Storage Network Function | VL Virtual Link, | |
| | VLAN Virtual LAN, Virtual Local Area Network | |
| UICC Universal Integrated Circuit Card | | |
| | VM Virtual Machine | |
| UL Uplink | VNF Virtualized Network Function | |
| UM Unacknowledged Mode | | |
| | VNFFG VNF Forwarding Graph | |
| UML Unified Modelling Language | | |
| | VNFFGD VNF | |
| UMTS Universal Mobile Telecommunication s System | Forwarding Graph Descriptor | |
| | VNFMVNF Manager | |
| UP User Plane | VoIP Voice-over-IP, | |
| UPF User Plane Function | Voice-over- Internet Protocol | |
| URI Uniform Resource Identifier | VPLMN Visited Public Land Mobile Network | |
| URL Uniform Resource Locator | | |
| | VPN Virtual Private Network | |
| URLLC Ultra-Reliable and Low Latency | | |
| | VRB Virtual Resource Block | |
| USB Universal Serial Bus | WiMAX Worldwide Interoperability for Microwave Access | |
| USIM Universal Subscriber Identity Module | | |
| | WLANWireless Local Area Network | |
| USS UE-specific search space | | |
| | WMAN Wireless | |
| UTRA UMTS Terrestrial Radio Access | Metropolitan Area Network | |

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like. The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB MeasurementTimingConfiguration.*

The term "SSB" refers to an SS/PBCH block.

The term "a "Primary Cell" refers to the MCG cell, operating on the primary frequency, in which the LTE either performs the initial connection establishment procedure or initiates the connection re-establishment procedure.

The term "Primary SCG Cell" refers to the SCG cell in which the LTE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a LTE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus of a New Radio (NR) User Equipment (UE) (302), the apparatus including a radio frequency (RF) interface, and one or more processors (314) coupled to the RF interface and configured to: use a pre-configured measurement gap for UE measurement, when the pre-configured gap status is switched between activated and deactivated during a measurement period.

2. The apparatus of claim 1, wherein the one or more processors (314) are configured to restart a new measurement reporting period when the pre-configured gap status changed.

3. The apparatus of claim 1 or 2, wherein the one or more processors (314) are further configured to continue an ongoing measurement reporting period when the pre-configured gap status changes.

4. The apparatus of any one of claims 1 to 3, wherein the one or more processors (314) are further configured to perform the measurement and to satisfy the measurement reporting period requirements in which the status is changed from activated to deactivated.

5. The apparatus of any one of claims 1 to 4, wherein the one or more processors (314) are further configured, for measurement requirements that can be performed within or without the measurement gap, to start the measurement from the first measurement sample after the pre-measurement gap status is changed during one measurement reporting period.

6. The apparatus of any one of claims 1 to 5, wherein the one or more processors (314) are further configured, for measurement requirements that can be performed within or without the measurement gap, to perform the measurement with the measurement gap.

7. The apparatus of any one of claims 1 to 6, wherein the one or more processors (314) are configured to perform the measurement within the measurement gap without satisfying the requirements of the measurement reporting period.

8. The apparatus of any one of claims 1 to 7, wherein the one or more processors (314) are further configured to:
continue the ongoing measurement period; or
start a new measurement reporting period; or
meet the requirement of the deactivated gap status after the pre-configured gap status changes.

9. A method of a taking measurements by a user equipment (UE) (202) comprising: using a pre-configured measurement gap for UE measurement, when the pre-configured gap status is switched between activated and deactivated during a measurement reporting period.

10. The method of claim 9, further comprising the LTE (202) restarting a new reporting measurement period when the pre-configured gap status changed.

11. The method of claim 9 or 10, further comprising the LTE (202) continuing an ongoing measurement reporting period when the pre-configured gap status changes.

12. The method of any one of claims 9 to 11, further comprising the UE (202) performing the measurement and satisfying the measurement reporting period requirements in which the status is changed from activated to deactivated.

13. The method of any one of claims 9 to 12, further comprising, for measurement requirements that can be performed within and/or without the measurement gap, the UE (202) performing the measurement with the measurement gap.

14. The method of any one of claims 9 to 13, further comprising the UE (202) performing the measurement within the measurement gap without satisfying the requirements of the measurement reporting period.

15. A non-transitory computer readable medium, comprising instructions which, if executed by one or more processors, cause the one or more processors to use a pre-configured measurement gap for UE measurement, when the pre-configured gap status is switched between activated and deactivated during a measurement period.
